# EUROPEAN PATENT APPLICATION

(11) **EP 3 072 721 A1**
(43) Date of publication of application: **28.09.2016**
(21) Application number: 16162317.8
(22) Date of filing: 24.03.2016
(51) Int. Cl.: B60J 5/06, B60J 7/10

(54) **A SIDE CURTAIN SYSTEM FOR A VEHICLE**

(30) Priority: 26.03.2015 AU 2015901097
(71) Applicant: Fleetmark Pty Ltd, Dandenong, South Victoria 3175 (AU)
(72) Inventor: COATES, Dean, Dandenong South, Victoria 3175 (AU); PRICE, Tony, Dandenong South, Victoria 3175 (AU); TOCCHET, Ennio, Dandenong South, Victoria 3175 (AU); CROSS, Robert, South Yarra, Victoria 3141 (AU)
(74) Representative: Fresh IP

(57) **Abstract**

A system for a vehicle body includes a side curtain that, relative to an in-use orientation, is suspendable from a track of the body by roller devices secured along an upper edge to enable the curtain to be drawn along the track. A post engaged or engageable with one end of the side curtain is rotatably mountable adjacent to one end of the body for horizontally tensioning the curtain. A rope or cable extends along and is engaged with the curtain at each of at least three longitudinally spaced engagement regions along a lower margin of the curtain, including at least two upper regions, and a respective lower region between each successive pairs of upper regions. A tensioning device is operable for drawing the one of opposite ends of the rope or cable horizontally whereby, with the rope or cable held against lifting at each lower engagement region, the rope or cable can be horizontally tensioned for vertically tensioning the curtain

## Description

### Field of the Invention

This invention relates to a side curtain system for a vehicle such as a truck or trailer, and to a securement device for use in the system.

### Background to the Invention

Curtain sided vehicles are used very extensively, particularly in the transportation of freight. The vehicles, which may comprise trucks or trailers such as for road transportation, have a body in the interior of which the freight can be conveyed. The body of such a vehicle has a load supporting surface defined by a deck or tray mounted for travel on wheels, as well as front and rear end walls, sometimes referred to as bulkheads, upstanding from the supporting surface, and a roof suspended above the support surface and extending between the front and rear walls. The rear wall may have a door or pair of doors able to be opened to provide access to the interior of the body for the loading or unloading of freight. However, the arrangement of the body is such that access for these purposes is available through at least one side of the body by provision of a side curtain system having a side curtain able to be extended along and close the side, or to be drawn to or towards one or other end wall, respectively to preclude or enable access to the interior of the body. Usually each side of the body is provided with a respective side curtain system. While it is usual for there to be a respective side curtain at each side, the vehicle may have a side curtain system at only one side, with the other side having a fixed and/or rigid sidewall extending between the end walls and between the supporting surface and the roof. Access to the interior of the body may be enabled by provision of at least one access door in such sidewall.

The usual arrangement for a side curtain system, at or adjacent to one side of a vehicle body, is for the side curtain to be suspended from a rail extending along the roof, at the one side. The suspension of the side curtain is by a plurality of roller devices each having a body attached to an upper edge margin of the side curtain and also having at least one roller engaged with the track or rail so the curtain can be moved longitudinally with respect to the side of the vehicle body. By this arrangement, the side curtain is able to be drawn to or towards one or the other end wall, or to be drawn out to extend between the end walls. When so extended, the side curtain can be tensioned horizontally between the end walls. Usually the side curtain has each of its ends attached to a respective one of two upstanding posts each releasably mounted in relation to the vehicle body adjacent to a respective one of the end walls. At least one of the posts is mounted so as be rotatable, such as by a ratchet mechanism actuated by a lever or a power drive. The arrangement is such that an end margin of the side curtain at the one post is drawn around the post, when the post is rotated, to thereby horizontally tension the side curtain between the two posts, with the other post functioning as an anchor for the other end of the side curtain. Each post may be rotatable although one of the posts functions to anchor the side curtain adjacent to the end wall at which the one post is mounted as the side curtain is horizontally tensioned by rotation of the other post.

It is required that the side curtain be tensioned vertically, as well as horizontally, and there are different systems in use for vertical tensioning of side curtains. The main system utilises a series of over-centre tensioning devices, such as buckles, that are attached to the side curtain at intervals spaced substantially horizontally along a line a short distance above the lower edge of the side curtain. Each tensioning device is mounted in relation to the side curtain adjacent to the lower end of a respective vertical reinforcing strap that is secured in relation to the side curtain and extends down from a respective roller device over a major part of the height of the curtain. The reinforcing straps strengthen the side curtain against stretching when vertically tensioned and also strengthen attachment of the roller devices and the buckles to the side curtain. Each reinforcing strap may be a strap of webbing material that usually is either secured to the side curtain, by stitching or welding, or retained in an elongate pocket formed on the inner surface of the side curtain. Alternatively, each reinforcing strap may be of a material that is relatively inextensible, such as a suitable metal or plastics material. Where of such relatively inextensible material, the strap preferably also is sufficiently resistant to bending that they enhance load restraint to a level such that side gates or similar frames need not be provided along the side of the vehicle body. Each tensioning device carries a short depending strap having an engagement member, such as a hook, at its lower end. The tensioning devices are adjustable between closed and open, or contracted and extended, positions or conditions. The arrangement is such that adjustment of the tensioning devices enables movement of the engagement members between an upper position in which they engage with a coaming rail, or possibly with a rope rail, along the adjacent side of the deck or tray of the vehicle body, and a lower position in which the engagement members are out of engagement with the coaming or rope rail. The spacing of each engagement member from the respective roller device is such that, with the engagement members in the upper positions, the side curtain is vertically tensioned.

The usual side curtain arrangement described above has a number of disadvantages. Not least among these is the need for an operator to manually open and close each of a relatively large number of buckles, or similar tensioning device, in turn. Considerable time can be required for these exercises. Also, the task of tensioning the side curtain can be very difficult in adverse weather conditions, in particular, in strong wind conditions. As a consequence, there has been a move in recent times to so-called "buckle-less" systems that are power operated. Examples of these are disclosed in European patent specification EP0738621 of Wabash National Corp., British patent specification GB2311087 by Southfields Coachworks Ltd., International patent specification WO2006089347 of Transking Corp. Pty. Ltd., and Australian patent specification AU2011201087 of Krueger Transport Equipment Pty. Ltd. In these buckle-less arrangements, engagement members on the curtain are not raised, by an over-centred tensioning devices mounted on the curtain, to apply vertical tension to the side curtain. Rather, the engagement members are simultaneously acted on by a power-driven system that is mounted to the deck or tray of the vehicle body and that is operable to engage the engagement members and draw the engagement members downwardly to thereby apply required vertical tension to the side curtain.

Another form of buckle-less system is that disclosed in International patent specification WO2008086584 of Transtech Research Pty. Ltd. This provides a side curtain with a lower edge having successive adjacent arcuate sections that are of downwardly concave form. An edge margin of each arcuate section defines an elongate pocket around its arcuate extent, while a rope or cable extends through the pocket of each arcuate section and has each of its ends connected to the deck or tray of the vehicle body adjacent to a respective end wall. A relatively short length of the rope or cable is exposed at a respective downwardly directed apex between each successive pair of arcuate sections to enable the rope or cable to be engaged at each apex by a respective tensioning device mounted below the deck or tray, for application of a downward force to tension the side curtain. International patent specification WO2008138059, also of Transtech Research Pty. Ltd., discloses one form of tensioning device suitable for use in the system of International specification WO2008086584.

British patent specification GB1521466, of Crane Fruehauf Ltd., discloses an earlier system for vertically tensioning of a side curtain. The Crane Fruehauf specification also proposes a different form of horizontal tensioning. For vertical tensioning, the side curtain has a lower edge along which successive adjacent arcuate sections are of downwardly concave form, with an edge margin around the arcuate extent of each arcuate section defining an elongate pocket. However, the arcuate sections are of shorter length and greater in number than in WO2008086584. As installed at a side of a vehicle body, the illustrated form of the side curtain of GB1521466 can be vertically tensioned by the use of two ropes or cables, each extending through the pockets of a respective one of two series of the elongate pockets in which successive pockets of one series alternate with successive pockets of the other series. The arrangement is such that, between successive pockets of each series of pockets, the respective rope or cable passes under a respective engagement member fixed to the deck or tray of the vehicle body at a location below an intervening pocket of the other series of pockets. Each rope or cable has one end secured to the deck or tray of the vehicle body, such as at a common end of the vehicle body for each rope or cable, while the other end of each rope or cable is secured to a respective lever-operated tensioning device by which the rope or cable can be pulled to apply tension along what, in contrast to the top or "first longitudinal edge" of the side curtain, is described as the bottom or "second longitudinal edge" of the side curtain. That is, the tension is applied somewhat horizontally.

While having some features in common with the system of WO2008086584, the manner in which the side curtain of GB1521466 is vertically tensioned differs from WO2008086584. In GB1521466, vertical tensioning is by the two ropes or cables being oppositely drawn horizontally from respective ends, to generate an upward force in each engagement member of a respective set of engagement members for each rope or cable that is fixed to the deck or tray, with resultant generation of a downward reaction force by each engagement member, while a downward force is generated in each arcuate pocket, substantially intermediate of its ends, to vertically tension the side curtain. In contrast, in WO2008138059, as proposed for use with the side curtain of patent specification WO2008086584, a separate tensioning device acts at each downwardly directed apex between successive pockets of the side curtain, to apply a downward force to the rope or cable and thereby horizontally tension the rope or cable between its fixed ends, and vertically tension the side curtain. In the system of WO2008138059 the tensioning devices are actuated simultaneously by a single controller, enabling the side curtain to be vertically tensioned and hence locked down quickly, or to be actuated simultaneously to release the side curtain and enable the side curtain to be drawn to provide access to the interior of the vehicle body. In contrast, the system of GB1521466 would seem to necessitate manual intervention to ensure each rope or cable is engaged with, or disengaged from, each engagement member before application, and after release, respectively, of tension in the ropes or cables.

The advances of the various systems described above are directed to vertical tensioning of a side curtain. As indicated, the systems in general also utilise a respective upstanding post mounted in relation to the vehicle body adjacent to each end wall, with a respective end of the side curtain attached to each post and with one or either of the posts rotatable for tensioning the side curtain horizontally, as detailed earlier herein. However, GB1521466 differs in its mode of horizontal tensioning.

The present invention seeks to provide an alternative side curtain system for a vehicle, such as a truck or trailer, a side curtain for such system and a securement device or reaction member for use in the system.

### Broad Summary of the Invention

The present invention provides a side curtain system, for use with a vehicle that has a body defining an interior in which freight can be accommodated and transported, the body including a load supporting surface defined by a deck or tray mounted for travel on wheels, front and rear end walls upstanding from the supporting surface, and a roof suspended above the support surface and extending between the front and rear walls, with access to the interior of the body available through a side of the body at which a track or rail extends along a side of the roof. The side curtain system includes:
(a) a side curtain that, relative to an in-use orientation of the system, is able to be suspended from the track or rail by provision of plurality of roller devices spaced along and securable to an upper edge margin of the side curtain thereby to enable the curtain to be drawn along the track or rail;
(b) a post engaged or engageable with one of opposite ends of the side curtain, with the post mountable in an upright disposition in relation to the vehicle body, adjacent to one of the end walls, so as to be rotatable for drawing the side curtain around the post whereby, with the curtain drawn out towards the other end wall and the other end of the side curtain anchored, the side curtain can be horizontally tensioned by rotation of the post; and
(c) a rope or cable that extends along and is engaged with the side curtain at each of at least three longitudinally spaced engagement regions of a lower edge margin of the side curtain, the regions including at least two upper regions and a lower region between the two upper regions or a respective lower region between the upper regions of each of successive pairs of upper regions, the rope or cable having one of opposite ends thereof secured or securable to a tensioning device operable for drawing the one end of the rope or cable horizontally whereby with the other end of the rope or cable secured and with the rope or cable releaseably held against lifting at the or each lower engagement region, the rope or cable can be horizontally tensioned for vertically tensioning the side curtain.

In relation to the invention, terms such as "above", "down", "upper", "lower", "over", "below", "horizontal" and "longitudinal", and their grammatical variants such as "downwards", "upwardly" and "horizontally", are used in relation to the system as installed for use in relation to the body of a vehicle. Also, terms such as "leading" and "trailing" are used relative to the direction for forward travel of the vehicle.

In the side curtain system of the present invention, the system is operable to enable simultaneous vertical and horizontal tensioning of the side curtain, as a consequence of rotation of the post that provides horizontal tensioning of the side curtain also causing vertical tension of the side curtain. The post thus functions as a common tensioning device operable for simultaneous application of both vertical and horizontal tension in the side curtain.

In one arrangement, the tensioning device is operable to rotate the post, with the one end of the rope or cable engaged or engageable with the tensioning device. For this, the rope or cable may be engaged or engageable with the post or with the side curtain adjacent to the post. The arrangement preferably is such that the rope or cable can be horizontally tensioned for vertically tensioning the side curtain by the one end of the rope of cable being drawn towards or around the post as the side curtain is horizontally tensioned by rotation of the post.

In another arrangement, the tensioning device is mounted or mountable on the body of the vehicle, with the one end of the rope or cable engaged or engageable with the tensioning device. In this case, the tensioning device is operable to draw the one end of the rope or cable longitudinally away from the secured other end of the rope or cable for longitudinally tensioning the rope or cable and thereby vertically tensioning the side curtain. The tensioning device may be a ratchet mounted at the side of the deck or tray, such as adjacent to the post, but a different ratchet to a ratchet by which the post is rotatable. Alternatively, the tensioning device mat be a suitable form of linear actuator, such as a rack and pinion actuator or a reciprocating pneumatic device.

The rope or cable may be engageable at the, or each, lower engagement region, with a, or a respective, reaction member secured in relation to a side of the vehicle body deck or tray. However, in an alternative, the rope or cable at each lower engagement region is engaged with a reaction member that is securable in relation to a side of the vehicle body deck or tray. In the latter case, as the rope or cable is horizontally tensioned, the side curtain is able to be vertically tensioned by a downward force applied to the side curtain by the rope or cable at each upper engagement region in response to an upward force acting between the rope or cable and the or each reaction member in response securement of the reaction member in relation to the side of the deck or tray.

The side curtain preferably has a substantially horizontally extending lower edge. Each upper engagement region is spaced above the lower edge, such as by 10 to 25 mm. The, or each, lower engagement region at or adjacent to the lower edge. Each upper engagement region may have an elongate pocket of downwardly concave arcuate shape that is formed on or in the side curtain and through which the rope or cable extends. However, such an arrangement of elongate pockets results in a relatively high level of friction resisting longitudinal adjustment of the rope of cable. As a result, the arrangement therefore is best suited for side curtains of relatively short lengths between the opposed ends, such as of a length suitable for a rigid body vehicle. Particularly for side curtains for longer vehicles, each upper engagement region preferably has at least one roller or sheave secured in relation to the side curtain and over which the rope or cable passes.

The side curtain may be, and preferably is, of double thickness along the lower edge margin. One layer of the double thickness may be formed by a separate strip of material that is secured to a main panel principally comprising the side curtain. However, the double thickness can be provided by folding up a strip, of material for the curtain, along a fold line that is to define the substantially horizontally extending lower edge. In each case, each upper engagement region preferably is at or adjacent to an upper edge of the strip, with the or each lower engagement region at or adjacent to the horizontally extending lower edge.

Where the lower edge of the curtain is of double thickness, the strip may have a substantially horizontally extending upper edge. However, the strip may have an upper edge that is other than substantially horizontal, such as an upper edge having the form of successive concave-down arcs. Each upper engagement region preferably is at or adjacent to the upper edge of the strip in each case. In the case of an upper edge of such successive arcs, each upper engagement region may be intermediate of ends of each arc, while the or each lower engagement region may be at or adjacent to an apex between the arcs or between respective successive arcs.

Instead of having a lower edge that is substantially horizontally extending, the side curtain may have a lower edge of a different form. For example, the lower edge may have at least two successive lengths of downwardly concave arcuate form with each upper engagement region adjacent to the upper edge of the strip and the, or each, lower engagement region at an, or a respective, apex between successive lengths. Preferably each upper engagement region is located intermediate the ends of a respective arcuate length, or along at least part of the respective length. Also, each upper engagement section may have a respective elongate pocket, of downwardly concave arcuate form provided in or around each arcuate lower edge length, through which the rope or cable extends. Alternatively, each upper engagement section may have a respective plurality of longitudinally spaced rollers or sheaves secured in relation to the side curtain and over which the rope or cable passes.

Where the side curtain has at least one roller or sheave, preferably at least two or three longitudinally spaced rollers or sheaves, at each upper engagement region, each of the rollers or sheaves may be secured to the side curtain individually. However, with at least two rollers or sheaves at each upper engagement region, the rollers or sheaves at each engagement section may be secured via a common plate secured to the side curtain. At the, or each, lower engagement region the rope or cable may define a depending loop able to engage under a reaction member secured to the side of the deck or tray of the vehicle body, with the rope or cable able to generate a upward force against the reaction member that is equal and opposite to a downward force generated by the rope or cable against the rollers or sheaves, as the rope or cable is being horizontally.

Alternatively, the rope or cable at the, or each, lower engagement region may define a depending loop from which a reaction member is suspended, with the reaction member having a lower part securable in relation to the side of the deck or tray. In the latter case, the reaction member preferably allows longitudinal relative movement of the rope or cable as tensioning of the rope or cable is applied to or released. With the application, or release, of tensioning of the rope or cable, the reaction member preferably is moved to a raised position, or a lowered position, respectively, such as to enable the lower part of the reaction member to be raised into, or lowered out of, engagement with a component at, or of, the side of the deck or tray of the vehicle body. In this way, the lower engagement region of the rope or cable is thereby able be secured in relation to, or released from, the side of the deck or tray. The reaction member preferably has an upwardly facing abutment surface that, with the reaction member in the raised position, engages the component at, or of, the side of the deck or tray, preferably with the lower region of the reaction member is in the form of a hook having an upwardly open bight.

The invention also provides a side curtain system is incorporated in a vehicle. The vehicle may comprise a relatively short rigid body vehicle. Alternatively, the vehicle may comprise a large vehicle, such as a road vehicle, having a substantially flat, but flexible bed forming the deck or tray.

The rope or cable preferably extends from one to the other end of the vehicle body, such as with each end of the rope or cable engaged with a respective post. At the other end there typically is another post that also may be rotatable, and this is necessary where the rope or cable is anchored at an intermediate location to enable each post to horizontally tension a respective length of the rope or cable and, hence, to vertically tension the side curtain. In a variant, the respective lengths may comprise separate ropes or cables, with the intermediate location being common to each, or with each rope or cable having a respective one of two intermediate locations. With the use of at least one intermediate location, the side curtain can be separately drawn back from each end of the vehicle body to the, or a respective, intermediate location or by releasing a single rope or cable at the intermediate location, the side curtain can be drawn back to the other end.

The side curtain system of the present invention has particular application to rigid body vehicles. However, particularly in forms using rollers or sheaves over which the rope or cable extends, the system also is able to be adapted for application to vehicles, such as trucks and trailers, of the types shown by the illustrated forms for the inventions of WO2006089347; AU2011201087 and WO2008086584 and designed for use as curtain sided vehicles.

As indicated, the system of the invention is able to be used with larger types of vehicles, such as a road vehicle having a substantially flat, but flexible bed forming the deck or tray. The larger types of flexible bed vehicles include those vehicles typically used for curtain sided trucks and trailers, such as those shown in the various patent specifications such as WO2006089347; AU2011201087 and WO2008086584. The system for such larger vehicles may have from four to six, or even more, lower engagement sections each located intermediate of two successive upper engagement sections.

In order that the invention may more readily be understood, description now is directed to the accompanying drawings, in which:
Figure 1 is a perspective view of a vehicle having installed thereon a side curtain system according to one form of the invention;
Figure 2 shows detail of Figure 1 on an enlarged scale;
Figure 3 is similar to Figure 1, but shows a side curtain system according to a second form of the invention;
Figure 4 is similar to Figure 3, but illustrates the system of the second form as installed on an alternative type of vehicle;
Figure 5 is a perspective view of a component of the vehicle of each of Figures 3 and 4;
Figure 6 is a side elevation of the component of Figure 5;
Figure 7 is a frond elevation of the component of Figure 5;
Figure 8 is a sectional view taken on line A-A of Figure 7;
Figure 9 is a perspective view on an alternative form of the component of the vehicle of each of Figures 3 and 4;
Figure 10 shows a section of curtain material for use in an initial stage of the production of an alternative form of side curtain for use in the system of the invention;
Figure 11 shows the alternative form of side curtain produced from the material of Figure 10;
Figure 12 shows a still further form of curtain for use in the system of the invention; and
Figure 13 shows part of the curtain of Figure 12 on an enlarged scale, with sections "A", "B" and "C" from Figure 13 showing detail on a still larger scale.

### Detailed Description of the Drawings

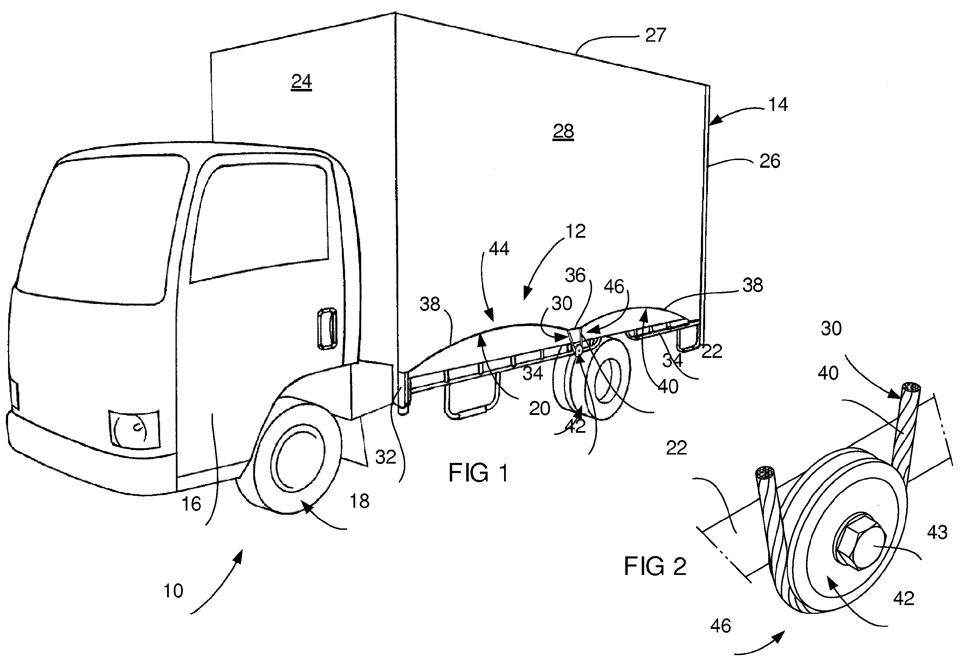

Figure 1 shows a vehicle 10 on which a side curtain system 12 has been installed at the near side illustrated. Typically, a similar system 12 will be installed of the other side. The vehicle 10 is of a rigid body type and has a body 14 behind the driver's cabin 16. The vehicle 10 is of the two axle variety, having a chassis (not shown) with a front, two wheel axle system 18 under cabin 16 and a four wheel axle system 20 to the rear of body 14.

The vehicle 10 has a freight carrying interior (not shown) within the body 14. The interior is defined by a deck or tray 22 which provides a freight supporting surface within body 14, a front wall 24, a rear wall 26, and a roof 27 extending between and supported on front wall 24 and rear wall 26. The body 14 also includes a side curtain system at the near side of body 14, or a respective one of opposed side curtain systems 12 at each side of body 14.

The side curtain system 12 includes a side curtain 28, a rope or cable 30, and an upright front post 32 releasably mounted between deck or tray 22 and the roof 27, adjacent to a side of front wall 24. The side curtain 28 is suspended from a rail (not shown) that extends along the side or the roof 27 by provision of a plurality of roller devices (also not shown) that are secure along the upper edge of the side curtain 28 and are able to run along the track The forward end of side curtain 26 is secured to post 32, while the rear end of side curtain is attached adjacent to rear wall 26, either to a component of rear wall 26 or, if provided, to a rear post (not shown) similar to post 32. The front post 32 is mounted in fittings (not shown) adjacent to deck or tray 22 and the roof 27 in a manner enabling the post to rotate around its substantially vertical axis, such as by a ratchet (not shown) with which the lower end of post 32 is releasably engageable. As the forward end of the side curtain 28 is attached to post 32, the curtain 28 is able to be drawn around or from the post 32, depending on the direction of rotation of post 32.

The side curtain 28 has a shaped lower edge that provides successive downwardly concave, arcuate sections 34 of and along the lower edge. In the arrangement illustrated in Figure 1, there are two sections 34. In longer rigid body vehicles, such as of a three axle type, there may be three to about five or more successive downwardly concave, arcuate sections. The leading one of the sections 34 commences adjacent to front wall 24 and extends to form a downwardly directed apex 36 between it and the trailing section 34, at a central location along deck or tray 22, while the trailing section 34 extends to a location adjacent to rear wall 26. Along and around each section 34, side curtain 28 defines a respective elongate flat, tubular pocket 38 that follows the form of its section 34 and is open at each end. The rope or cable 30 extends from post 32, through each pocket 38 to a location adjacent to rear wall 26. The leading and of the rope or cable 30 is secured in relation to the lower end of post 32, either directly or to a fitting, such as an annular collar on the post, or to an adjacent location on the curtain 28, while the trailing end of rope or cable 30 is either similarly secured in relation a rear post, if provided or to a location on the rear end of deck or tray 22, rear wall 26 or the adjacent end of curtain 28. Where the trailing end of the rope is not connected to a rear post or curtain 28, it may be secured in any convenient way, such as by passing through the nip of a cam cleat mounted on deck or tray 22 or on the rear wall 26. Between the sections 34, rope or cable 30 is exposed and provides a loop 40 that depends below apex 36. The loop 40 passes under a fitting 42, shown on an enlarged scale in Figure 2. The fitting is secured at a mid-region of the side of the deck or tray 22 so that the loop 40 is able to be shortened and brought into engagement with a downwardly facing abutment surface comprising the under-surface of fitting 42. In the arrangement shown, fitting 42 comprises a roller, such as a roller able to rotate on a pin or stub axle or bolt 43 secured in relation to the deck or tray 22.

Use of a cleat to secure the trailing end of the rope or cable 30 provides an arrangement enabling longitudinal adjustment of the rope or cable 30 to compensate for its stretching over a period of use. Other systems for securing the trailing end of the rope or cable 30 also may include a device that enables such compensation. Alternatively, a device by which the leading end of the rope or cable is secured in relation to the post 32, whether this is directly to the post 32, to a fitting on the post or to an adjacent location on the curtain, may enable longitudinal adjustment of the rope or cable for such compensation. In any event, the system 12, as with any other system of the invention described herein, most preferably needs to have provision for adjusting to compensate for stretching of the rope or cable.

The arrangement of the side curtain system 12 of Figure 1 enables the side curtain 28 to be simultaneously tensioned horizontally and vertically. In line with many forms of side curtain arrangements, horizontal tensioning results from rotation of post 32 to draw the forward end of side curtain 28 around post 32, with the rear end of curtain 28 anchored. Vertical tensioning of the curtain 28 results from rotation of post 32, such as due to rope or cable 30 also being drawn around post 32 and thereby to shorten of the length of rope or cable 30 between post 32 and the location at which the trailing end of rope or cable 30 is secured and horizontally tension that length of the rope or cable 30 and apply vertical tension to the curtain 28. However, where the leading end of the rope or cable 30 is secured to the curtain at a location adjacent to the post, the rope or cable 30 is similarly horizontally tensioned to vertically tension the curtain 28 as the curtain is horizontally tensioned and the leading end of the rope or cable 30 is drawn towards the post 32 with the curtain. In each case, at least a mid-part of the length of each pocket 38 acts as an upper engagement section 44, while the underside abutment surface of roller 42 interacts with loop 40 to provide a lower engagement section 46. Thus, as the length of rope or cable 30 between post 32 and the securement of the trailing end is shortened, or the leading end of the rope or cable is drawn towards the post 32, the rope or cable 30 is pulled down at each upper engagement section 44 and upwardly at the lower engagement section 46. An upward force is generated by loop 40 moving to contact the abutment surface of roller 42 so that upward movement of the rope or cable 30 at section 46 is arrested, with generation of a downward reaction force from roller 42. However, the downward movement of the rope or cable 30 at each section 44 is resisted only by the side curtain, resulting in the side curtain being pulled down at each section 44.and tensioned vertically.

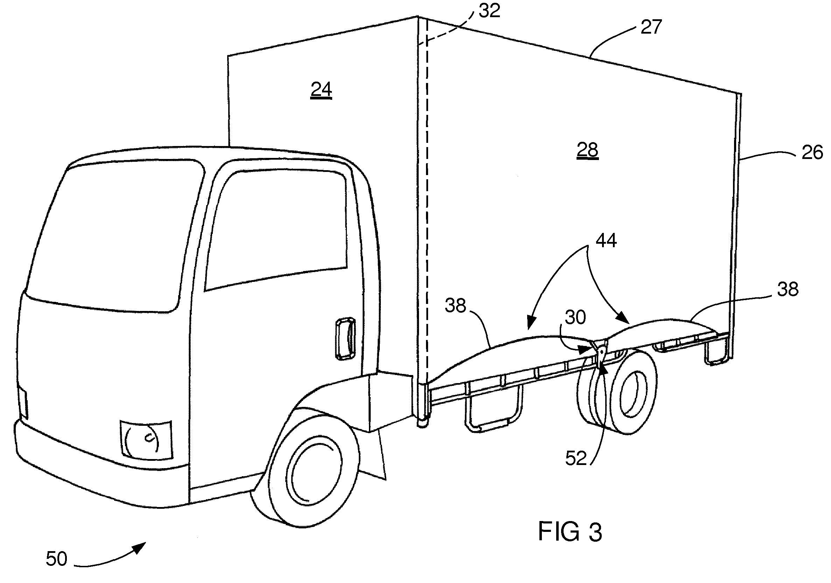

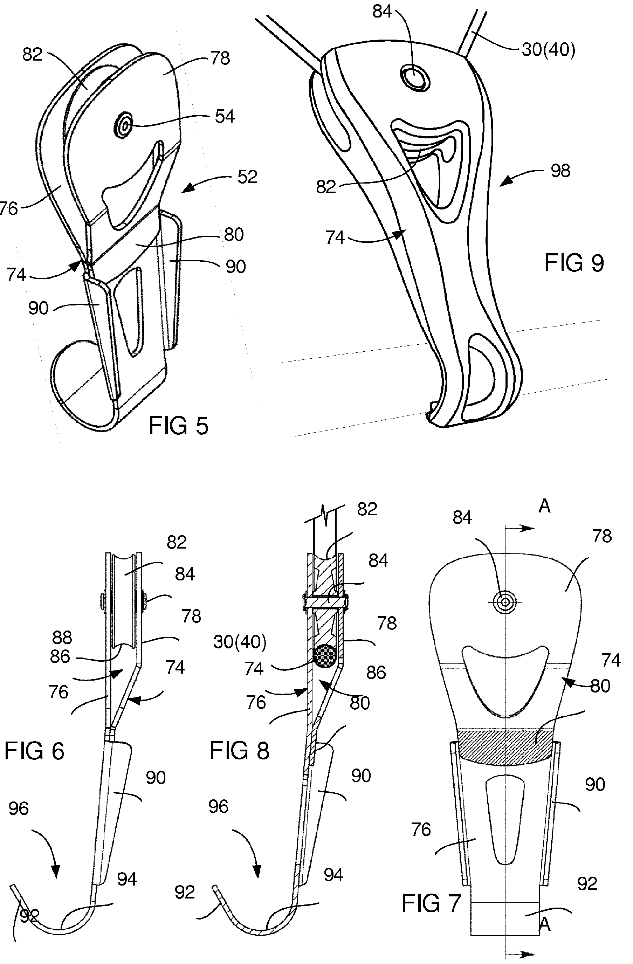

Figure 3 shows a vehicle 50 that is similar to vehicle 10 of Figure 1 and has a side curtain system 12 installed in relation to the rigid body 14 of vehicle 50. Components of vehicle 50 that correspond to components of vehicle 10 have the same reference numerals as in Figure 1. The sole difference in vehicle 50 is the provision of an alternative arrangement at the lower engagement section 46. In Figure 3, the section 46 again includes a depending loop 40 of the rope or cable 30. However, in this instance, member 52 includes a reaction member 52 suspended from the loop 40. The form of reaction member 52 of Figure 3 is shown in more detail in Figures 5 to 8, while on alternative form comprising reaction member 98 is shown in Figure 9. The reaction member 52, as shown in more detail in Figures 5 to 8, has a main body 74 formed of suitable stiff material. Suitable materials include sheet metal, such as steel, and engineering plastics materials. The body 74 includes an elongate main plate 76 and a secondary plate 78 that extends over an upper part of main plate 76. At a mid-height region of body 74, at a lower edge region 80 of secondary plate 78, the plates 76 and 78 are secured together, such as by welding, heat fusion or adhesive bonding. Above region 80 secondary plate 78 first diverges from, and then extends substantially parallel to, the main plate 76. A roller 82 is located between the plates 76 and 78 and is held on a pin 84 secured at respective ends in each of plates 76 and 78. The plates 76 and 78, with roller 82, define a passageway 86 between the roller 82 and the region 80 at which the plates 76 and 78 are joined. The rope or cable 30 passes through the passage 86, as shown in Figure 8, to enable the reaction member 52 to hang from a loop 40 in the cable or rope 30, with the roller 82 resting on the rope or cable 30 and enabling the rope or cable 30 to move longitudinally through the passage 86. To facilitate this movement of rope or cable, roller 82 has a peripheral channel 88 in which the rope or cable 30 locates, while the roller 82 preferably is rotatable on pin 84. Below region 80, the main plate 76 is strengthened by side margins 90 that are substantially perpendicular to the remainder of plate 76. Also, the lower end of plate 76 is turned up away from the face at which plate 78 is located to define an upwardly open hook 92 having an abutment surface 94 below an upwardly open bight 96.

Thus the reaction member 52 has a lower part, defined by the lower extent of plate 76, margins 90 and hook 92, securable in relation to the side of the deck or tray 22. The reaction member 52 allows longitudinal relative movement of the rope or cable 30 in the passageway 80 as tensioning of the rope or cable 30 is applied to or released. The loop 40 of the rope or cable 30 locates under a bearing surface of the reaction member comprising roller 82, with the rope or cable 30 held captive under the weight of member 52 within the peripheral channel 88 of roller 82. As roller 82 rotates, channel 88 provides a bearing surface that facilitates the longitudinal movement of the rope or cable 30 as tensioning of the rope or cable 30 is applied or released.

With the application, or release, of tensioning of the rope or cable 30 in the side curtain system 12 of vehicle 50, the reaction member 52 is moved to a raised position, or a lowered position, respectively. This movement enables the reaction member 52 to be raised or lowered, respectively to move hook 92 into, or out of, engagement with a component at, or of, the side of the deck or tray 22 of the vehicle body 14. In the arrangement shown in Figure 3 that component is a rope rail 58 that extends along the side of the deck or tray 22. Thus, the lower engagement section 46 is thereby able be secured in relation to, or released from, the side of the deck or tray 22. The reaction member 52 has an upwardly facing abutment surface 60 by which, with the reaction member 52 in the raised position, the member 52 engages the rope rail 58 at the side of the deck or tray 22. In the arrangement shown in Figure 3, the lower section of the reaction member 52 is in the form of a hook 62 having an upwardly open bight 64. In the form shown, the component at, or of, the side of the deck or tray is a coaming rail 66, although it alternatively could be a rope rail extending along the side of the deck or tray.

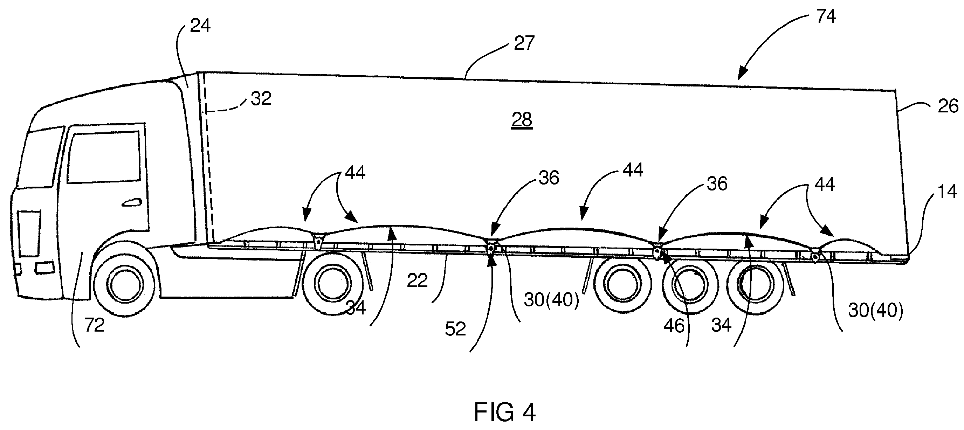

Figure 4 shows a vehicle 70 comprising a truck including two axle a prime mover 72 that has a fifth wheel (not shown) by which a kingpin (also not shown) of a three axle semi-trailer 74 is connected. Apart from the vehicle type, and the resultant size differences relative to the vehicle 50 of Figure 3, components of vehicle 70 corresponding to those of vehicle 50 have the same reference.

Semi-trailer 74 provides a freight carrying interior (not shown) within the body 14. The interior is defined by a deck or tray 22 which provides a freight supporting surface within body 14, a front wall 24, a rear wall 26, and a roof 27 between and supported on front wall 24 and rear wall 26. The body also includes opposed side curtain systems 12, each at a respective side of body 14. However, the deck or tray is able to flex to a degree under load, and semi-trailer 74 is not in the nature of a rigid body vehicle.

The side curtain system 12 includes a side curtain 28, a rope or cable 30, and forward and rear upright front posts (not visible),each releasably mounted between deck or tray 22 and the roof 27, adjacent to a side of a respective one of front wall 24 and rear wall 26. The side curtain 28 is suspended from a rail (not shown) that extends along the side or the roof 27 by provision of a plurality of roller devices (also not shown) that are secured at intervals along the upper edge of the side curtain 28 and engaged on the rail so as to be able to run along the rail. The forward end of side curtain 26 is secured to the forward post 32, while the rear end of side curtain is attached to the rear post. At least one, but preferably each, of the front and rear posts releasably is mounted in fittings (not shown) adjacent to deck or tray 22 and the roof 27. The mountings for at least one of the posts enable the respective post to rotate around its substantially vertical axis. As each end of the side curtain 28 is attached to a respective one of the front and rear post 32, rotation of one of the posts causes a relatively short length of the curtain 28 to be drawn around or from the rotating post, depending on the direction of rotation of the post. The rotation may be under the action of a tensioning device mounted below the deck or tray, below a rotatably mounted one of the posts, or a respective such for each post. The, or each, tensioning device may be a ratchet tensioner, although a power driven system can be used.

The principle difference between the side curtain 12 of the vehicle 70 of Figure 4 and that of vehicle 10 of Figure 3 is due to the considerable greater length of vehicle body 14 of vehicle 70. As a consequence, the side curtain 28 is correspondingly longer, while there is a larger number of downwardly concave arcuate sections 34 along the lower edge of curtain 28, and a larger number of upper engagement sections 44 and lower engagement sections 46. In the specific arrangement shown for vehicle 70, there are five arcuate sections 34, five upper sections 44 and four lower sections 46, with each section 46 between successive sections 44. Around each arcuate section 34, a respective elongate pocket is defined at the lower edge of side curtain 38. Also, at each lower section 46, there is a downwardly depending loop 40 of the rope or cable 30 with a depending reaction member 52. Each member 52 preferably is as described above for the members 52 of vehicle 50 of Figure 3. Further detail of a specific form of reaction member 52 is shown in Figures 5 to 8, while an alternative form of reaction member 98 is shown in Figure 9.

In the arrangement of Figure 4, the rope or cable 30 extends between the front and rear posts so as to be able to be tensioned by being drawn around one or other of the posts as the post is rotated to horizontally tension the side curtain 26. Thus, rotation of one of the posts also vertically tensions the side curtain 26. However, instead of providing a single length of rope or cable 30 able to be tensioned at one or other ends, the single length may be anchored at a location mid-way along the length of this deck or tray 22, such as by provision of a suitable clamp mounted on the side of the deck or tray 22, or by provision of an oppositely acting pair of clam cleats. Alternatively the rope or cable 30 may split into two lengths, each having an end similarly anchored at such mid-way locations.

In Figures 5 to 8, there is shown reaction member 52 having a main body 74 formed of suitable stiff material. Suitable materials include sheet metal, such as steel, and an engineering plastics material. The body 74 includes an elongate main plate 76 and a secondary plate 78 that extends over an upper part of main plate 76. At a mid-height region of body 74, a lower edge region 80 of secondary plate 78, the plates are secured together, such as by welding, heat fusion or adhesive bonding. Above region 80 secondary plate 78 first diverges from, and then extends substantially parallel to, the main plate 76. A roller 82 is located between the plates 76 and 78 and is held on a pin 84 secured at respective ends in each of plates 76 and 78. The plates 76 and 78, with roller 82, define a passageway 86 between the roller 82 and the region 80 at which the plates 76 and 78 are joined. The rope or cable 30 passes through the passage 86, as shown in Figure 8, to enable the reaction member 52 to hang from a loop 40 in the cable or rope 30, with the roller 82 resting on the rope or cable 30 and enabling the rope or cable 30 to move longitudinally through the passage 86. To facilitate this movement of rope or cable, roller 82 has a peripheral channel 88 in which the rope or cable 30 locates, while the roller 82 preferably is rotatable on pin 84. Below region 80, the main plate 76 is strengthened by side margins 90 that are substantially perpendicular to the remainder of plate 76. Also, the lower end of plate 76 is turned up away from the face at which plate 78 is located to define the upwardly open hook 92, and the abutment surface 94 in the upwardly open bight 96.

The alternative form of reaction member 98 shown in Figure 9 has parts corresponding to those of member 52 of Figures 5 to 8 identified by the same reference numeral. The principle difference of member 98, relative to the member 52 of Figures 5 to 8, is that its body 74 is of unitary construction, and produced by casting a suitable metal, such as aluminium, magnesium or titanium, or moulded of a suitable engineering plastics material. The body has a bifurcated upper end in which roller 82 is rotatable on pin 84 as rope or cable 30 moves longitudinally as tensioning is applied or released as described above.

With either the reaction member 52 of Figures 5 to 8, or the reaction member 98 of Figure 9, the body hangs down or depends from the rope or cable. Either of members 52 and 98 is raised or lowered as the loop 40 of the rope or cable 30 is shortened or lengthened with application or release of tensioning of the rope or cable. In the raised position, each of members 52 and 98 is able to engage a coaming or rope rail 99, as shown in broken outline for member 98 in Figure 9. The member 52 or 98 is able to be raised by application of tension to the rope or cable 30 so that the rail 99 is received through the bight 96 of hook 92, the abutment surface 94 is brought into engagement with the underside of rail 99, and upward movement of the member 52 or 98 then is arrested. As the rope or cable 30 is further tensioned, a downward force is applied to each upper engagement section 44 located to each side of the member 52 or 98, to apply downward vertical tension to the side curtain at each section 44.

As described above, vertical tension is applied to, or released from, the rope or cable 30 by rotation in the appropriate direction of a post to which one of the opposite ends of the side curtain 28 is attached for application or release of horizontal tensioning of the side curtain. Thus, the side curtain 28 is able to be simultaneously tensioned both horizontally and vertically. In one arrangement an end of the rope or cable 28 may be connected to the post around which the curtain is to be drawn, or from which the curtain 28 is to be released, with the connection preferably adjacent to the deck or tray of the vehicle body. To enable this the rope or cable may pass to the post after passing under or through a guide mounted at the side of the deck or tray at a location adjacent to the post. In an alternative arrangement, the end of the rope or cable 28 is connected to the curtain adjacent to the post, with this connection also preferably at a location adjacent to the deck or tray of the vehicle body.

Only a relatively short end section of the rope or cable needs to be drawn around, or towards, the post in order to tension the rope or cable to an extent providing required vertical tensioning of the side curtain. However, rotation of the post to achieve that tensioning needs to accord relatively closely with rotation of the post necessary for application of required horizontal tensioning. To enable this, the post may have a section onto which the rope or cable is to be drawn that is decreased or increased in circumference relative to the main extent of the post to enable a given amount of rotation of the post achieving the dual purposes of horizontal and vertical tensioning. However, to ensure this remains the case, despite stretching of the rope or cable with repeated use, the connection of one or other of the ends of the rope or cable preferably is adjustable to offset the consequence of stretching.

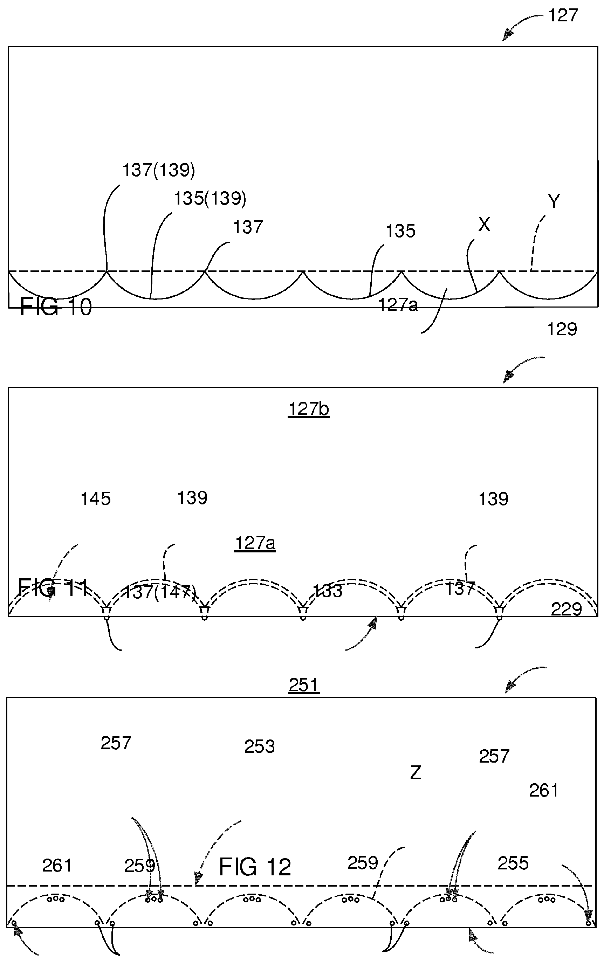

Figure 11 shows an alternative form of side curtain 129 suitable for use in the system of the invention. The side curtain 129 is produced from a rectangular section of curtain material 127 shown in Figure 10. In brief, the lower edge of the material 127 is cut along the line "X" to provide a lower margin 127a that has a scalloped lower edge 131 that is the inverse of the edge for the curtains 28 of each of Figures 1, 3 and 4. That is, the edge 131 produced by cutting along line "X" has successive concave-up sections 135, with an upwardly directed apex 137 between successive sections 135. The scalloped lower edge 131 then is formed to provide an arcuate, tubular pocket 139 around each section 135. Following this, a lower margin 127a of the material below longitudinally extending line "Y" is folded up to overlay the main extent 127b of the material 127, preferably at what is to be the inner face of the side curtain 129, and then is secured to the main extent of the material to form the side curtain 129 as shown in Figure 11. Thus, the side curtain 129, relative to its normal in use orientation illustrated, has a straight, horizontally extending lower edge 133, with the lower margin 127a of side curtain 129 that results from the fold, being of a double thickness. The lower margin 127a may be secured to the main extent 127b in any convenient way, such as by welding of adhesive bonding, such as below the pockets 139. However, the securement preferably is non-permanent, and may be provided by press studs or the like or by patches of hook and loop material such as Velcro.

As is apparent from Figure 11, the side curtain 129 has a straight lower edge 133 formed at fold line "Y", in contrast to the arrangement of each of Figures 1, 3 and 4. However, in line with Figures 1, 3 and 4, the side curtain 129 has tubular pockets 139 that are concave down, with the apices 137 downwardly directed adjacent to the lower edge. Also, as with the respective curtains 28 of Figures 1, 3 and 4, the arrangement of side curtain 129 enables a rope or cable (not shown) to be inserted through the successive pockets 139, to expose a loop of the rope or cable (not shown) at each apex 137, if necessary with a small opening provided at each apex for the loop. Thus, the side curtain 129 has an upper engagement section 145 provided by at least a mid-part of the length of each pocket 139, while a lower engagement section 147 is formed adjacent to each apex 137.

With the side curtain 129 mounted in relation to the side of the body of a vehicle, in the manner described in relation to curtain 28 of each of Figures 1, 3 and 4, the ends of the rope or cable, when so inserted, is able to be secured at each end in a manner enabling vertical tensioning of the side curtain 129 by a downward force applied at each upper engagement section 145. For this, one end of the rope or cable may be secured to a first post that is rotatable, at one end of the body of a vehicle to which the side curtain 129 is installed, for horizontally tensioning the side curtain 129, or secured to the side curtain 129 adjacent to the first post. Thus, with the other end of the rope or cable secured adjacent to the other end of the vehicle body, such as to a second post at the other end, or to the curtain or deck adjacent to the other end, the side curtain is able to be simultaneously tensioned both vertically and horizontally by rotation of the first post to draw the curtain around the first post.

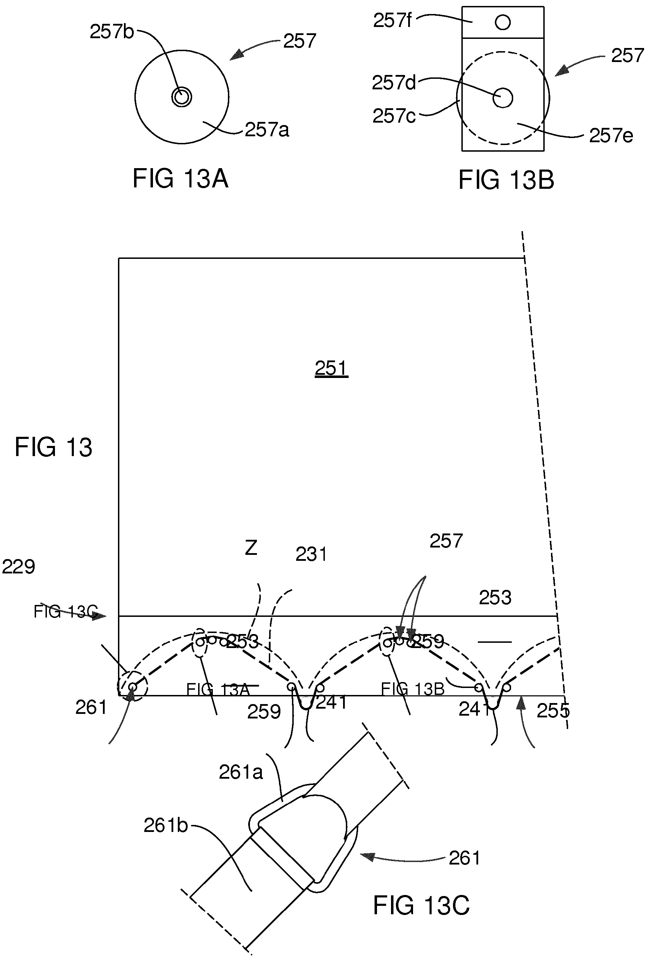

Each of Figures 1, 3 and 4 can necessitate the provision of a cover strip behind or in front of the lower margin of the side curtain 28. While the arcuate sections 34 can be relatively shallow, there can be a gap between the sections 34 and the upper surface of the deck or tray 22 through which cargo is exposed, and such a gap can necessitate the provision of such cover strip. However, the arrangement for side curtain 129 obviates the need for such cover strip given that the straight lower edge of side curtain 129 formed at fold line "Y" enables the avoidance of any gap through which cargo is exposed. The same advantage is obtained with the side curtain 229 shown in Figures 12 and 13. In some respects, side curtain 229 is similar to side curtain 129, although it utilises rollers or sheaves for transmitting longitudinal tensioning of a rope or cable to provide vertical tensioning of side curtain 229. While the arrangement of Figures 10 and 11 is suitable for a wide range if vehicle bodies, overcoming friction acting against longitudinal movement of a rope or cable through successive elongate arcuate pockets makes difficult the use of side curtain 129 for long vehicle bodies. The use of rollers or sheaves substantially reduces friction, to an extent facilitating the use of curtain 229 in even the longest vehicle bodies and, if required, rollers or sheaves could be used259 instead of elongate pockets in the previously described embodiments of the invention.

Figure 12 shows the outer surface of the side curtain 229, whereas the inner surface of curtain 229 is shown in Figure 13. The side curtain 229 has a main panel 251, and an overlay strip 253 that extends over and along a lower margin of panel 251. In the arrangement shown, the strip 253 overlays the lower margin of panel 251 at the inner surface of side curtain 229, as is preferred, although cover strip 253 could extend over the outer surface. As intimated, side curtain 229 has a straight lower edge 255 that extends along each of panel 251 and cover strip 253. The main panel 251 and cover strip 253 may be provided by folding up a lower section of a deeper length of curtain material, along a fold line which defines the lower edge 255, to form a strip that then is secured against the lower margin of the main panel 251 to form cover strip 253. However, in an alternative arrangement, overlay strip 253 may be a separate length of material that overlays and is secured in relation to the main panel 251. The overlay strip 253 may be secured by welding or bonding the main panel 251, such as along the upper edge 253a of the overlay strip 253, or by other means such as discussed in relation to the arrangement of side curtain 129 of Figure 11.

Along an undulating dotted line "Z" shown as extending along the overlap between the cover strip 253 and the main panel 251, a number of rollers or sheaves 257 are positioned in groups of three along and between main panel 251 and cover strip 253. Each group of rollers or sheaves 257 is located away from the lower edge 255, nearer to the upper edge of the overlay strip 253, with the first and third roller or sheave a little further from that upper edge than the intermediate roller or sheave 257 of each group. From Figure 13, sections "A", "B" and "C" show on an enlarged scale detail that otherwise is not discernible on the scales of the main drawings of Figures 12 and 13. Also, sections "A" and "B" show alternatives whereas it would be more usual to use one or other arrangement throughout the side curtain 229. As shown in the enlargement "A" from Figure 13, each roller or sheave 257 may comprise a grooved pulley wheel 257a and a pin 257b on which the pulley wheel 257a is rotatable on a rotational axis that is perpendicular to main panel 251 and cover strip 253. In that case an end of each pin 257b may be secured to cover strip 253 or to main panel 251, or a respective end of each pin 257b may be secured to each of the cover strip 253 and the main panel 251. Alternatively, as shown in enlargement "B" from Figure 13, each roller or sheave 257 may comprise a grooved pulley wheel 257c that is rotatable on a pin 257d in a frame or yoke 257e, with the frame or yoke 25e having a tab 257f by which the roller or sheave 257 is secured to either one, or to each, of the cover strip 253 and the main panel 251. A rope or cable 231 extends along and between the margin of main panel 251 and the cover strip 253, somewhat along the line Z. The rope or cable extends over and engages each roller or sheave 257 of each group. However, between each group of rollers or sheaves 257, the rope or cable follows line down to the lower edge 255, with the rope or cable passing below edge 255 to form a loop 241. Where the edge 255 is at a fold line, each loop 241 of the rope or cable may be located below a short respective slit along the fold line whereas, where the cover strip is provided by a separate length of material, each loop 241 may simply project below the lower edge of that separate length and the main panel 251. In each case, the rope or cable may pass to and from each loop over a respective one of a closely spaced pair of rollers or sheaves 259 that is secured adjacent to edge 255 in essentially the manner as rollers or sheaves 257.

With the side curtain 229 mounted in relation to the side of the body of a vehicle, in the manner described in relation to curtain 28 of each of Figures 1, 3 and 4, the ends of the rope or cable, when so inserted, is able to be secured at each end in a manner enabling vertical tensioning of the side curtain 229 by a downward force applied to the rollers or sheaves 257 at each upper engagement section 245. For this, one end of the rope or cable may be secured to a first post that is rotatable, at one end of the body of a vehicle to which the side curtain 229 is installed, for horizontally tensioning the side curtain 229. Alternatively, as shown in enlargement "C" from Figure 13, the one end of the rope or cable may be secured to an anchor member 261 mounted on the side curtain 229 adjacent to the first post (not shown), the member in this instance being a D-ring 261 a secured to the side curtain 229 though a mounting tab 261 b pinned to the curtain 229. Thus, with the other end of the rope or cable secured adjacent to the other end of the vehicle body, such as to a second post at the other end, or to the curtain or deck adjacent to the other end, the side curtain is able to be simultaneously tensioned both vertically and horizontally by rotation of the first post to draw the curtain around the first post. Again, in such an arrangement, vertical tensioning of the side curtain 229 can be achieved by an actuator operable to pull an end of the cable or rope horizontally, as previously discussed.

The rollers or sheaves 257 and 259, and ring 261 are between curtain 251 and strip 253. However, they are in solid line for ease of illustration.

## Claims

1. A side curtain system, for use with a vehicle that has a body defining an interior in which freight can be accommodated and transported, the body including a load supporting surface defined by a deck or tray mounted for travel on wheels, front and rear end walls upstanding from the supporting surface, and a roof suspended above the support surface and extending between the front and rear walls, with access to the interior of the body available through a side of the body at which a track or rail extends along a side of the roof; wherein the side curtain system includes:
(d) a side curtain that, relative to an in-use orientation of the system, is able to be suspended from the track or rail by provision of plurality of roller devices spaced along and securable to an upper edge margin of the side curtain thereby to enable the curtain to be drawn along the track or rail;
(e) a post engaged or engageable with one of opposite ends of the side curtain, with the post mountable in an upright disposition in relation to the vehicle body, adjacent to one of the end walls, so as to be rotatable for drawing the side curtain around the post whereby, with the curtain drawn out towards the other end wall and the other end of the side curtain anchored, the side curtain can be horizontally tensioned by rotation of the post; and
(f) a rope or cable that extends along and is engaged with the side curtain at each of at least three longitudinally spaced engagement regions of a lower edge margin of the side curtain, the regions including at least two upper regions and a lower region between the two upper regions or a respective lower region between the upper regions of each of successive pairs of upper regions, the rope or cable having one of opposite ends thereof secured or securable to a tensioning device operable for drawing the one end of the rope or cable horizontally whereby with the other end of the rope or cable secured and with the rope or cable releaseably held against lifting at the or each lower engagement region, the rope or cable can be horizontally tensioned for vertically tensioning the side curtain

2. The system of claim , wherein the tensioning device is operable to rotate the post, and the one end of the rope or cable is engaged or engageable with the tensioning device by being engaged or engageable with the post or with the side curtain adjacent to the post, whereby the rope or cable can be horizontally tensioned for vertically tensioning the side curtain by the one end of the rope of cable being drawn towards or around the post as the side curtain is horizontally tensioned by rotation of the post.

3. The system of claim 1, wherein the tensioning device is mounted or mountable on the body of the vehicle, and the one end of the rope or cable is engaged or engageable with the tensioning device whereby the tensioning device is operable to draw the one end of the rope or cable longitudinally away from the secured other end of the rope or cable for longitudinally tensioning the rope or cable and thereby vertically tensioning the side curtain.

4. The system of any one of claims 1 to 3, wherein the rope or cable is engageable, at the or each lower engagement region, with a reaction member secured in relation to a side of the vehicle body deck or tray.

5. The system of any one of claims 1 to 3, wherein the rope or cable at each lower engagement region is engaged with a reaction member that is securable in relation to a side of the vehicle body deck or tray whereby, as the rope or cable is horizontally tensioned, the side curtain is able to be vertically tensioned by a downward force applied to the side curtain by the rope or cable at each upper engagement region in response to an upward force acting between the rope or cable and the or each reaction member in response securement of the reaction member in relation to the side of the deck or tray.

6. The system of any one of claims 1 to 5, wherein the side curtain has a substantially horizontally extending lower edge, with each upper engagement region spaced above the lower edge and with the or each lower engagement region at or adjacent to the lower edge, with each upper region having either (a) an elongate pocket of downwardly concave arcuate shape that is formed on or in the side curtain and through which the rope or cable extends or (b) at least one roller or sheave secured in relation to the side curtain and over which the rope or cable passes.

7. The system of claim 6, wherein the curtain is of double thickness along the lower edge margin, with one layer formed by (a) a separate strip of material or (b) by folding a strip, of material for the curtain, along a fold line defining the substantially horizontally extending lower edge, with each upper engagement region at or adjacent to an upper edge of the strip and the or each lower engagement region at or adjacent to the horizontally extending lower edge.

8. The system of claim 7, wherein the strip has (a) a substantially horizontally extending upper edge or (b) an upper edge having the form of successive concave-down arcs, with each upper engagement region at or adjacent to the upper edge of the strip, such as intermediate ends of each arc and the or each lower engagement region at or adjacent to an apex between the arcs or between respective successive arcs.

9. The system of any one of claims 1 to 6, wherein the side curtain has a lower edge having at least two successive lengths of downwardly concave arcuate form, with the lower engagement region at an apex between successive lengths, preferably with each upper engagement region located intermediate the ends of a respective length, or along at least part of the respective length, and with each upper engagement section having either (a) a respective elongate pocket of downwardly concave arcuate form provided in or around each arcuate lower edge length and through which the rope or cable extends or (b) a respective plurality of longitudinally spaced rollers or sheaves secured in relation to the side curtain and over which the rope or cable passes.

10. The system of claim 6 or claim 7, wherein the side curtain has at least two, preferably at least three, rollers or sheaves spaced longitudinally at each upper engagement region, such as by the rollers or sheaves being secured to the side curtain individually, or via a common plate secured to the side curtain, and wherein at the, or each, lower engagement region the rope or cable defines a depending loop able to engage under a reaction member secured to the side of the deck or tray of the vehicle body, with the rope or cable able to generate a upward force against the reaction member that is equal and opposite to a downward force generated by the rope or cable against the rollers or sheaves, as the rope or cable is being horizontally.

11. The system of claim 6 or claim 7, wherein the side curtain has at least two, preferably at least three, rollers or sheaves spaced longitudinally at each upper engagement region, such as by the rollers or sheaves being secured to the side curtain individually, or via a common plate secured to the side curtain, and wherein at the, or each, lower engagement region the rope or cable defines a depending loop from which a reaction member is suspended, with the reaction member having a lower part securable in relation to the side of the deck or tray, the reaction member preferably allowing longitudinal relative movement of the rope or cable as tensioning of the rope or cable is applied to or released.

12. The system of claim 9, wherein with the application, or release, of tensioning of the rope or cable, the reaction member is moved to a raised position, or a lowered position, respectively, such as to enable the lower part of the reaction member to be raised into, or lowered out of, engagement with a component at, or of, the side of the deck or tray of the vehicle body, whereby the lower engagement region of the rope or cable is thereby able be secured in relation to, or released from, the side of the deck or tray.

13. The system of claim 12, wherein the reaction member has an upwardly facing abutment surface that, with the reaction member in the raised position, engages the component at, or of, the side of the deck or tray, preferably with the lower region of the reaction member is in the form of a hook having an upwardly open bight.

14. The system of any one of claims 1 to 13, wherein the system is incorporated in a vehicle comprising a relatively short rigid body vehicle or a vehicle a comprising large vehicles, such as a road vehicle, having a substantially flat, but flexible bed forming the deck or tray.
